# EUROPÄISCHE PATENTSCHRIFT

(11) **EP 2 345 572 B1**
(45) Veröffentlichungstag und Bekanntmachung des Hinweises auf die Patenterteilung: **22.08.2012**
(21) Anmeldenummer: 11150732.3
(22) Anmeldetag: 12.01.2011
(51) Int. Cl.: B62D 15/02

(54) **Verfahren zur Unterstützung eines Fahrers eines Kraftfahrzeuges**
Method to support a driver of a motor vehicle
Procédé destiné à assister un conducteur de véhicule automobile

(30) Priorität: 18.01.2010 DE 102010000964
(43) Veröffentlichungstag der Anmeldung: 20.07.2011
(73) Patentinhaber: Robert Bosch GmbH, 70442 Stuttgart (DE)
(72) Erfinder: Pampus, Christian, 71229, Leonberg (DE); Scheuerle, Thomas, 71711, Murr (DE); Niemz, Volker, 71277, Rutesheim (DE)

(56) Entgegenhaltungen:
- EP-A1- 2 116 425
- EP-A2- 1 491 430
- DE-A1-102005 037 468

## Beschreibung

### Verfahren zur Unterstützung eines Fahrers eines Kraftfahrzeuges

### Stand der Technik

Die Erfindung geht aus von einem Verfahren nach DE 10 2005 037 468 A1 zur Unterstützung eines Fahrers eines Kraftfahrzeugs bei einem Rangiermanöver gemäß dem Oberbegriff des Anspruchs 1.

Rangiermanöver werden zum Beispiel durchgeführt beim Einparken eines Fahrzeugs in eine Parklücke. Insbesondere bei einem Einparken in eine Längsparklücke, wenn diese nicht lang genug ist, um den Einparkvorgang in einem Zug durchzuführen, sind mehrere Fahrzüge und damit ein Rangiermanöver notwendig. Auch beim Einparken in eine Querparklücke, insbesondere wenn der Abstand entweder zu der Querparklücke gegenüberliegenden Objekten oder zum Gegenverkehr zu gering ist, um in einem Zug einparken zu können, werden mehrere Rangierzüge benötigt.

Zur Unterstützung des Fahrers eines Kraftfahrzeuges bei einem solchen Rangiermanöver werden üblicherweise Fahrassistenzsysteme, zum Beispiel Einparkassitenzsysteme, die den Fahrer des Fahrzeuges beim Einparken in Parklücken unterstützen, eingesetzt.

Bei Einparkassistenzsystemen, wie sie derzeit bekannt sind, wird unterschieden in rein abstandsmessende Einparkassistenzsysteme und in solche Systeme, die den Fahrer beim Einparkvorgang weitergehend unterstützen. Hierbei wird unterschieden in semi-automatische, automatische und autonome Systeme. Bei semi-automatischen Systemen werden dem Fahrer Hinweise zu notwendigen Lenkeinstellungen gegeben, um das Fahrzeug optimal in eine Parklücke einzuparken. Hierzu wird im Allgemeinen zunächst bei der Vorbeifahrt an einer Parklücke die Parklücke vermessen und aus den Daten der Parklücke eine geeignete Einparktrajektorie berechnet. Der Fahrer erhält daraufhin Hinweise zu Lenkbewegungen, die durchgeführt werden müssen, um das Fahrzeug entlang der Einparktrajektorie in die Parklücke zu fahren. Die Hinweise an den Fahrer können zum Beispiel durch Pfeildarstellungen und/oder durch Darstellung der Einparktrajektorie erfolgen. Neben der Unterstützung des Fahrers, bei der notwendige Lenkbewegungen angezeigt werden, ist es auch möglich, dass vom Einparkassistenzsystem die Lenkung übernommen wird. Hierzu erhält ein geeigneter Stellantrieb Befehle vom Steuergerät des Einparkassistenzsystems und übernimmt die Lenkung des Fahrzeugs für den Fahrer. lm Unterschied zu den semi-automatischen Systemen wird bei automatischen Systemen neben der Lenkung des Fahrzeuges auch die Längsführung, das heißt Beschleunigen, Abbremsen und Halten der Geschwindigkeit des Fahrzeuges übernommen. Bei einem autonomen System erfolgt der Gesamteinparkvorgang automatisch durch das Fahrzeug, dem Fahrer kommt auch keine überwachende Funktion mehr zu, so dass der Fahrer zum Beispiel vor dem Einparken das Fahrzeug verlassen kann.

Ein System zur Manövrierunterstützung des Fahrers eines Kraftfahrzeuges ist zum Beispiel in FR-A 2 887 842 beschrieben.

Nachteil der bekannten Systeme ist jedoch, dass in Abhängigkeit von der Konfiguration des Fahrassistenzsystems Situationen auftreten können, bei denen im Stand gelenkt wird. Bei Fahrassistenzsystemen, die Lenkanweisungen an den Fahrer geben, wird ein Großteil der Lenkvorgänge im Stand erfolgen. Im Unterschied dazu wird bei einer automatisierten Lenkansteuerung darauf geachtet, dass ein harmonisches Manövrieren erfolgt, so dass stets während der Fahrt innerhalb des ersten Zuges gelenkt wird. Jedoch werden aufgrund der oftmals geringen Abmessungen vor und hinter dem Fahrzeug beim Erreichen des tiefsten Punktes in einer Parklücke die Korrekturzüge innerhalb der Parklücke durch ein Lenken im Stand realisiert, da diese Art von Bewegungen den geringsten Platz benötigen. Durch das Lenken im Stand erfolgt jedoch eine hohe Belastung der Lenkung und es entstehen Torsionskräfte zwischen Straße und Reifen, die zu Abweichungen innerhalb der Bahnsteuerung führen können. Bei automatisch lenkenden Systemen wird die Wartezeit für das Lenken im Stand vom Fahrer oftmals als unangenehm beurteilt, da dieser nur passiv am Geschehen beteiligt ist. Auch kann je nach Leistung des zur Lenkung eingesetzten Stellantriebes ein Lenkvorgang im Stand lange Zeit andauern.

### Offenbarung der Erfindung

### Vorteile der Erfindung

Beim erfindungsgemäßen Verfahren zur Unterstützung eines Fahrers eines Kraftfahrzeuges bei einem Rangiermanöver, wobei das Rangiermanöver mindestens einen Vorwärtszug und einen Rückwärtszug umfasst, werden für das Rangiermanöver notwendige Trajektorien berechnet und die Lenkung des Kraftfahrzeuges wird durch eine automatische Lenkansteuerung realisiert, wobei zumindest jeder gefahrene Vorwärtszug unmittelbar vor Erreichen eines berechneten Endpunktes der Trajektorie eine Klothoide aufweist, entlang der die Räder des Kraftfahrzeuges in eine neutrale Position gebracht werden.

Durch das in eine neutrale Position Bringen der Räder entlang einer Klothoide am Ende eines jeden Vorwärtszuges, wird erreicht, dass ein Lenken im Stand reduziert wird. Gleichzeitig wird ein fahrertypisches Verhalten adaptiert, wodurch die Akzeptanz des Einsatzes des Verfahrens zunimmt. Auch führt das erfindungsgemäße Verfahren insgesamt zu einem harmonischen Einparken in die Parklücke und das subjektive Empfinden für den Fahrer, lange Zeiten im Stillstand warten zu müssen, wird minimiert, da aufgrund der Klothoiden jeweils am Ende der Vorwärtszüge ein Lenken im Stillstand nicht erforderlich ist. Durch die Vermeidung des Lenkens im Stillstand wird zudem die Belastung der Lenkung minimiert. Auch werden die zwischen Strasse und Reifen auftretenden Torsionskräfte minimiert, so dass keine Abweichungen innerhalb der Bahnsteuerung auftreten.

Ein weiterer Vorteil des erfindungsgemäßen Verfahrens ist, dass bei einem Überfahren der Endposition des Vorwärtszuges durch den Fahrer, wenn dieser das Fahrzeug zum Beispiel nicht rechtzeitig zum Stillstand bringt, das Fahrzeug entlang einer Geraden bewegt wird und für den nächsten Fahrzeug lediglich ein Zurückfahren entlang dieses Geradenstücks bis zum zuvor berechneten Endpunkt notwendig ist, um den nächsten Rangierzug zu starten. Es ist somit nicht erforderlich, beim Überfahren des berechneten Endpunktes einer Bahn neue Trajektorien zu ermitteln.

Das erfindungsgemäße Verfahren eignet sich insbesondere zum Einparken in Parklücken, so dass das Rangiermanöver ein Rangiermanöver in eine Parklücke ist. Insbesondere ist das Verfahren geeignet, wenn die Parklücke eine Querparklücke ist, da das Einparken in eine Querparklücke im Allgemeinen mit mindestens zwei Rangierzügen, einem ersten Vorwärtszug und einem nachfolgenden Rückwärtszug erfolgt. Alternativ ist es auch möglich, dass der erste Fahrzug in die Querparklücke ein Rückwärtszug ist. In diesem Fall ist im Allgemeinen ein schräges Anfahren an eine seitliche Begrenzung der Querparklücke notwendig, so dass der erste Rückwärtszug von einem Vorwärtszug und einem weiteren Rückwärtszug gefolgt wird.

In einer ersten Ausführungsform der Erfindung endet der Vorwärtszug mit einer Klothoide, entlang der die Räder des Kraftfahrzeuges in eine neutrale Position gebracht werden. Ein jeweils einem Vorwärtszug folgender Rückwärtszug endet in einem Kreisbogen, um auf diese Weise das fahrertypische Verhalten zu adaptieren. Das Enden des Rückwärtszuges in einem Kreisbogen entspricht dabei dem fahrertypischen Verhalten. Das heißt, im Allgemeinen wird der Fahrer auf entsprechende Weise seinen Rückwärtszug beenden. Ein weiterer Vorteil, den Rückwärtszug in einem Kreisbogen zu beenden ist, dass Begrenzungen, beispielsweise Begrenzungen in einer Parklücke, konsistent in den Rück- und Außenspiegeln betrachtet werden können. Da der Stopppunkt zumindest des ersten Rückwärtszuges beim Einparken in eine Querparklücke zum Beispiel durch ein die Querparklücke begrenzendes seitliches Objekt gegeben wird, kann dieser nicht überfahren werden. Das Verfahren ist somit hinsichtlich des Rückwärtszuges robust gegen ein Überfahren, während beim Vorwärtszug, der überfahren werden kann, die Räder in Neutralstellung enden. Um nach einem in einem Kreisbogen geendeten Rückwärtszug ein Lenken im Stand zu vermeiden, ist es vorteilhaft, wenn ein dem Rückwärtszug folgender Fahrzug mit einer Klothoide beginnt, entlang der die Räder zunächst über die Neutralstellung in die Position für einen nachfolgenden Fahrzug gebracht werden.

In einer alternativen Ausführungsform endet jeder gefahrene Fahrzug unmittelbar vor Erreichen eines berechneten Endpunktes der Trajektorie mit einer Klothoide, entlang der die Räder des Kraftfahrzeugs in eine neutrale Position gebracht werden. Hierdurch wird vermieden, dass das Fahrzeug im Stand gelenkt wird und somit ein insgesamt harmonischeres Einparken in eine Parklücke erreicht wird. Auch wird das subjektive Empfinden für den Fahrer, lange Zeit im Stillstand warten zu müssen, minimiert, da auf Grund der Klothoiden jeweils am Ende der Fahrzüge ein Lenken im Stillstand nicht erforderlich ist. Auch erfolgt eine weitere Minimierung der Belastung der Reifen.

Bei einem Einparken in eine Längsparklücke, in die ein einzügiges Einparken möglich ist, ist es ebenfalls vorteilhaft, wenn die Räder am Ende des Einparkvorgangs in einer neutralen Position sind. Dies ist jedoch nicht zwingend notwendig, so dass das erfindungsgemäße Verfahren besonders vorteilhaft eingesetzt wird bei Rangiermanövern zum Einparken in Längsparklücken, bei denen mehrere Fahrzüge notwendig sind oder beim Einparken in Querparklücken, das mehrere Fahrzüge benötigt.

In der Erfindung wird bei einem Überfahren des berechneten Endpunktes das Fahrzeug in einer Geradeausfahrt bewegt und im nachfolgenden Zug entlang der Geraden wieder bis zum berechneten Endpunkt, der nun Startpunkt der nächsten Trajektorie ist, bewegt. Dies hat, wie oben bereits dargelegt, den Vorteil, dass nicht nach einem Überfahren des Endpunktes, der den Startpunkt für die nächste Trajektorie darstellt, eine erneute Berechnung der Einparktrajektorien erfolgen muss. Es können die bereits berechneten Einparktrajektorien weiter befahren werden. Dies macht insbesondere den Einsatz von komplexen Überplanalgorithmen überflüssig.

Ein weiterer Vorteil ist, dass bei großen Ausscherbewegungen zum Beispiel in Richtung des Gegenverkehrs oder auf ein stehendes Objekt zu das Lenkrad in Neutralstellung ist und der Fahrer seine Eigenbewegung sehr gut abschätzen kann. Die verbesserte Abschätzung der Bewegung durch den Fahrer trägt zusätzlich zur Sicherheit und damit zur Kollisionsvermeidung bei.

Ein weiterer Vorteil ist, dass bei der Geradeausfahrt in Richtung von vorhandenem Gegenverkehr, die sich zum Beispiel durch Überfahren eines Endpunktes einer Trajektorie ergeben kann, ein Seitenaufprall mit anderen Fahrzeugen minimiert wird, da diese zuerst die vordere rechte Front treffen würden. Dadurch sind die bei einer solchen möglichen Kollision entstehenden Folgen geringer als bei einem herkömmlichen Seitenaufprall.

Ein weiterer Vorteil des erfindungsgemäßen Verfahrens ist es, dass eine Lenkbewegung im Stand nicht erfolgt, so dass auch Stellantriebe für die automatische Lenkung eingesetzt werden können, die nur eine geringe Leistung aufweisen und damit nur geringe Kosten verursachen. So können zum Beispiel Stellantriebe eingesetzt werden, die einen Lenkvorgang im Stand nicht hinreichend unterstützen, jedoch eine Lenkung während der Fahrt ermöglichen.

Da aufgrund der Geradeausbewegung beim Überfahren eines Endpunktes einer Trajektorie und der dadurch gegebenen Möglichkeit, durch einfaches Zurückfahren entlang der Strecke bis zum Endpunkt eine Neuberechnung von Trajektorien zu vermeiden, ist es vorteilhaft, wenn alle für das Rangiermanöver notwendigen Trajektorien vor dem Fahren entlang der ersten Trajektorie berechnet werden. Alternativ ist es jedoch auch möglich, dass zum Beispiel nachfolgende Trajektorien erst berechnet werden, während die erste Trajektorie bereits befahren wird.

Wenn eine für das Rangiermanöver berechnete Trajektorie nicht mit einer Geradeausfahrt ab ihrem Startpunkt beginnt, ist es bevorzugt, wenn ab dem Startpunkt der Trajektorie entlang einer ersten Klothoide die Räder in eine für einen nachfolgenden Trajektorienabschnitt notwendige Position gebracht werden. Der der ersten Klothoide nachfolgende Trajektorienabschnitt kann zum Beispiel ein Kreisbogen sein. Durch das in Position bringen der Räder entlang einer ersten Klothoide ab dem Startpunkt der Trajektorie, wird auch bei Beginn des Befahrens einer jeglichen Trajektorie vermieden, dass ein Lenken im Stand erfolgen muss. Die Trajektorien für jeden Fahrzug werden so berechnet, dass jede Trajektorie zunächst ab dem Startpunkt von einer Neutralposition der Räder ausgeht.

Um auch während des Durchfahrens einer Trajektorie während eines Fahrzuges zu vermeiden, dass die Räder im Stand gelenkt werden, ist es weiterhin vorteilhaft, wenn zum Beispiel Kurvenbahnen mit unterschiedlichen Radien oder Kurvenbahnen mit einem konstanten Radius und Geradenstücke der jeweiligen Trajektorie durch Klothoiden verbunden werden, wobei während des Überfahrens der Klothoide jeweils die Räder in die für die nachfolgenden Abschnitte notwendige Position gebracht werden.

### Kurze Beschreibung der Zeichnungen

Ausführungsbeispiele der Erfindung sind in den Figuren dargestellt und werden in der nachfolgenden Beschreibung näher erläutert.

Es zeigen:
- Figur 1: eine Trajektorie für einen ersten Fahrzug in eine Querparklücke,
- Figur 2: eine Trajektorie für einen zweiten Fahrzug zum Einparken in eine Querparklücke,
- Figur 3: eine Trajektorie für einen dritten Fahrzug zum Einparken in eine Querparklücke.

### Ausführungsbeispiele der Erfindung

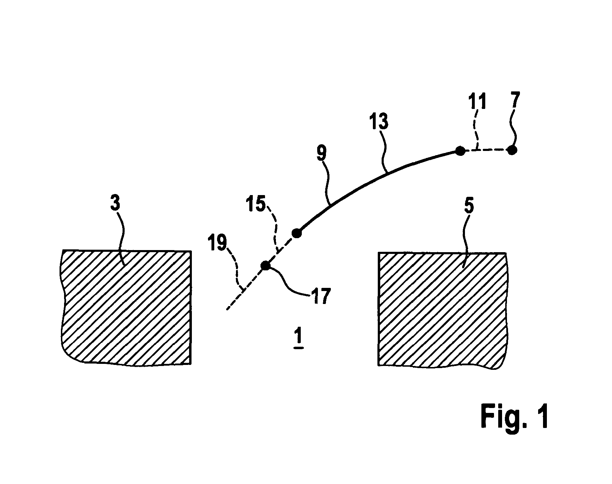

In Figur 1 ist eine Trajektorie für einen ersten Fahrzug zum Einparken in eine Querparklücke dargestellt.

Eine Querparklücke 1 wird zum Beispiel durch ein erstes Objekt 3 auf einer Seite und ein zweites Objekt 5 auf der anderen Seite begrenzt. Das erste Objekt 3 und das zweite Objekt 5 sind zum Beispiel Fahrzeuge, die auf der Querparklücke 1 benachbarten Parkplätzen parken. Alternativ ist es jedoch auch möglich, dass entweder das erste Objekt 3, das zweite Objekt 5 oder sowohl das erste Objekt 3 als auch das zweite Objekt 5 von Fahrzeugen verschiedene Objekte sind. So können diese zum Beispiel auch Mauern, Pflanzen, Pflanzenkübel oder ähnliches sein, die die Querparklücke 1 an ihrer Seite begrenzen.

Um den Fahrer eines Fahrzeuges, das in die Querparklücke 1 einparken soll, beim Einparkvorgang zu unterstützen, wird im Allgemeinen bei einem Vorbeifahren an der Parklücke die Geometrie der Parklücke 1 erfasst. Das Erfassen der Geometrie erfolgt dabei im Allgemeinen mit geeigneten Sensoren, die am Fahrzeug angebracht sind. So ist es zum Beispiel möglich, dass seitlich am Fahrzeug ein Sensor angebracht ist, der den Bereich neben dem Fahrzeug erfasst und auf diese Weise detektiert, ob eine geeignete Parklücke vorhanden ist. Um eine Querparklücke zu detektieren ist es hierbei vorteilhaft, wenn der Bereich, der vom Sensor erfasst wird, ausreichend groß ist, um die gesamte Länge der Querparklücke zu erfassen. Auf diese Weise können zum Beispiel auch Objekte, die sich weiter hinten in der möglichen Parklücke befinden, detektiert werden. Eine solche Parklücke kann dann als geeignete Parklücke ausgeschlossen werden.

Eine mit einem entsprechend geeigneten Sensor erfasste Parklücke eignet sich dann als Parklücke, wenn diese eine ausreichende Breite aufweist, so dass das Fahrzeug in die Parklücke einparken kann und es nach dem Einparken auch noch möglich ist, zumindest die Fahrertür zu öffnen, damit der Fahrer das Fahrzeug verlassen kann. Zudem sollte die Parklücke eine Länge aufweisen, die ausreichend groß ist, dass das gesamte Fahrzeug in der detektierten Querparklücke 1 abgestellt werden kann.

Neben dem seitlich an dem Fahrzeug angebrachten Sensor ist es weiterhin vorteilhaft, wenn am Fahrzeug im Frontbereich und im Heckbereich weitere Abstandssensoren angeordnet sind. Mit den entsprechenden Abstandssensoren im Frontbereich und im Heckbereich lässt sich der Abstand zu Objekten in der Umgebung des Fahrzeuges detektieren. Dies ist insbesondere hilfreich, um den Fahrer des Fahrzeugs beim Einparken während des Einparkvorganges zu unterstützen und eine rechtzeitige Warnung bei Annäherung an ein Objekt zu geben. Hierdurch wird der Fahrer bei der Längsführung des Fahrzeugs unterstützt und kann das Fahrzeug rechtzeitig zum Stillstand bringen.

Als Sensoren, die zur Erfassung einer Parklücke und auch als Abstandssensoren eingesetzt werden können, eignen sich zum Beispiel Ultraschallsensoren, Radarsensoren, Infrarotsensoren, kapazitive Sensoren, LIDAR-Sensoren oder optische Sensoren, beispielsweise Stereo-Videosensoren. Wenn der Sensor zur Erfassung der Parklücke eingesetzt wird, wird der Abstand zu Objekten seitlich neben dem Fahrzeug erfasst. Aus den so erfassten Daten kann ein Steuersystem im Fahrzeug erfassen, ob eine geeignete Querparklücke 1 vorliegt.

Wenn durch das System eine geeignete Parklücke detektiert worden ist, können Einparktrajektorien in die Parklücke berechnet werden. Die Einparktrajektorien in die Parklücke werden so bestimmt, dass das Einparken des Fahrzeugs in die Querparklücke 1 mit möglichst wenigen Zügen erfolgen kann, wobei gleichzeitig eine möglichst geringe Behinderung des Gegenverkehrs erfolgen sollte und zudem zu berücksichtigen ist, wie viel Platz zum Rangieren des Fahrzeuges zur Verfügung steht.

Die vom Fahrzeug zurückzulegenden Bahnen, die auch als Trajektorien bezeichnet werden, geben im Allgemeinen den Weg des Mittelpunkts der Hinterachse des Fahrzeugs wieder. Alternativ zum Mittelpunkt der Hinterachse kann jedoch auch jeder beliebige andere Punkt des Fahrzeugs zur Berechnung der Trajektorie herangezogen werden. Besonders bevorzugt ist jedoch ein Punkt auf der Mittellinie des Fahrzeuges, insbesondere der Mittelpunkt der Hinterachse.

Bei dem in den Figuren 1 bis 3 dargestellten Einparkvorgang in eine Querparklücke fährt das Fahrzeug zunächst quer zur Querparklücke an der Parklücke vorbei, bis ein geeigneter Startpunkt 7 zum Einparken in die Querparklücke 1 erreicht wurde. Vom Startpunkt 7 aus beginnt dann das Rangiermanöver in die Querparklücke 1 entlang einer ersten Trajektorie 9.

Aufgrund der Vorbeifahrt an der Querparklücke 1 quer zur Querparklücke 1 befinden sich die Räder des Fahrzeugs am Startpunkt 7 in neutraler Position, das heißt, in einer Position, in der sich das Fahrzeug geradeaus bewegt. Um eine Richtungsänderung des Fahrzeuges herbeizuführen, ist der erste Teilabschnitt der ersten Trajektorie 9 eine erste Klothoide 11. Beim Fahren entlang der ersten Klothoide 11 werden die lenkbaren Räder des Fahrzeuges so gelenkt, dass nach Beendigung der ersten Klothoide 11 ein erster Kreisbogen 13 vom Fahrzeug zurückgelegt werden kann. Das Fahrzeug fährt anschließend entlang dem ersten Kreisbogen 13, bis eine Position schräg zur Querparklücke 1 und dem die Querparklücke begrenzenden ersten Objekts 3 erreicht worden ist. Am Ende der ersten Trajektorie 9 geht der erste Kreisbogen 13 in eine zweite Klothoide 15 über, entlang der die Räder des Fahrzeuges bis zum Erreichen des Endpunktes 17 der ersten Trajektorie 9 wieder in neutrale Position gebracht werden. Am Endpunkt der ersten Trajektorie 9, sobald die Räder ihre neutrale Position erreicht haben, wird bei einem semi-automatischen System dem Fahrer ein Hinweis gegeben, das Fahrzeug anzuhalten. Dieser Hinweis kann zum Beispiel optisch oder akustisch erfolgen. Alternativ ist es auch möglich, dass der Fahrer den Hinweis, das Fahrzeug anzuhalten lediglich dadurch erhält, dass dem Fahrer angezeigt wird, dass die Räder in neutraler Position sind. Sollte der Fahrer das Fahrzeug nicht rechtzeitig beim Erreichen des Endpunktes 17 anhalten, bewegt sich das Fahrzeug entlang einer Geraden 19 weiter. Der Fahrer hat lediglich darauf zu achten, dass rechtzeitig vor einer Kollision mit dem ersten Objekt 3, das die Querparklücke 1 begrenzt, das Fahrzeug angehalten wird.

Um den Fahrer bei der Längsführung des Fahrzeugs zu unterstützen, sind vorzugsweise die bereits zuvor erwähnten Abstandssensoren im Frontbereich und im Heckbereich des Fahrzeugs angeordnet. Zur Unterstützung des Einparkvorganges erhält der Fahrer optische und/oder akustische Hinweise zum Abstand zu Objekten in der Umgebung des Fahrzeugs. Gleichzeitig wird eine rechtzeitige Warnung ausgegeben, das Fahrzeug anzuhalten, bevor eine Kollision droht.

Eine optische Anzeige kann zum Beispiel durch eine Darstellung auf einem Bildschirm eines Bordcomputers oder auch durch LEDs erfolgen. Bei der Anzeige durch LEDs ist es möglich, dass mit Annäherung an ein Objekt eine zunehmende Anzahl an LEDs aufleuchtet. Eine zusätzliche Warnung an den Fahrer kann dadurch erfolgen, dass zum Beispiel bei Unterschreiten eines vorgegebenen Mindestabstands LEDs in einer anderen Farbe, beispielsweise rot, aufleuchten. Eine akustische Warnung erfolgt üblicherweise durch das Senden von reflektierenden Signaltönen. Mit abnehmendem Abstand zu einem Objekt nimmt in diesem Fall üblicherweise der Abstand zwischen zwei Tönen ebenfalls ab. Bei Unterschreiten eines vorgegebenen Mindestabstandes ertönt eine Stoppwarnung in Form eines Dauertons. Neben den hier beschriebenen, bereits aus dem Stand der Technik bekannten Anzeigeformen ist aber auch jede beliebige andere, dem Fachmann geläufige Anzeigemöglichkeit zur Anzeige eines Abstandes zu einem Objekt möglich.

Die Lenkung des Fahrzeuges beim Fahren entlang der Trajektorie kann entweder automatisch mit Hilfe eines Stellantriebes, der von einem Steuergerät des Fahrassistenzsystems gesteuert wird, erfolgen oder aber durch den Fahrer, indem der Fahrer Hinweise zur Lenkführung erhält. Die Hinweise zur Lenkführung können zum Beispiel optisch oder haptisch erfolgen. So ist es zum Beispiel möglich, dass dem Fahrer durch geeignete Pfeile angezeigt wird, wie er das Lenkrad zu bewegen hat. Alternativ ist es jedoch zum Beispiel auch möglich, dem Lenkrad ein Moment aufzubringen, das den Fahrer veranlasst in die entsprechende Richtung zu lenken.

Neben dem Einsatz in semi-automatischen Systemen, wie Sie vorstehend beschrieben sind, ist es auch möglich, das Verfahren in einem vollautomatischen System einzusetzen. In diesem Fall wird auch die Längsführung vom Fahrassistenzsystem übernommen. In diesem Fall ist es insbesondere erforderlich, dass im Frontbereich und im Heckbereich Abstandssensoren angeordnet sind, damit das Fahrzeug rechtzeitig vor einer Kollision mit einem Objekt, das die Querparklücke 1 begrenzt, angehalten werden kann. Vorteil einer automatischen Längsführung des Fahrzeuges ist, dass das Fahrzeug im Allgemeinen rechtzeitig bei Erreichen des jeweiligen Endpunktes 17 der Trajektorie 9 angehalten wird.

Wenn das Einparken durch ein semi-automatisches System erfolgt und der Fahrer den Endpunkt 17 verpasst hat, so dass das Fahrzeug entlang der Geraden 19 gefahren ist, beginnt der nachfolgende Zug damit, dass das Fahrzeug vorwärts entlang der Geraden 19 bis zum Endpunkt 17 bewegt wird. Der Endpunkt 17 wird dann zum Startpunkt 21 einer zweiten Trajektorie 23.

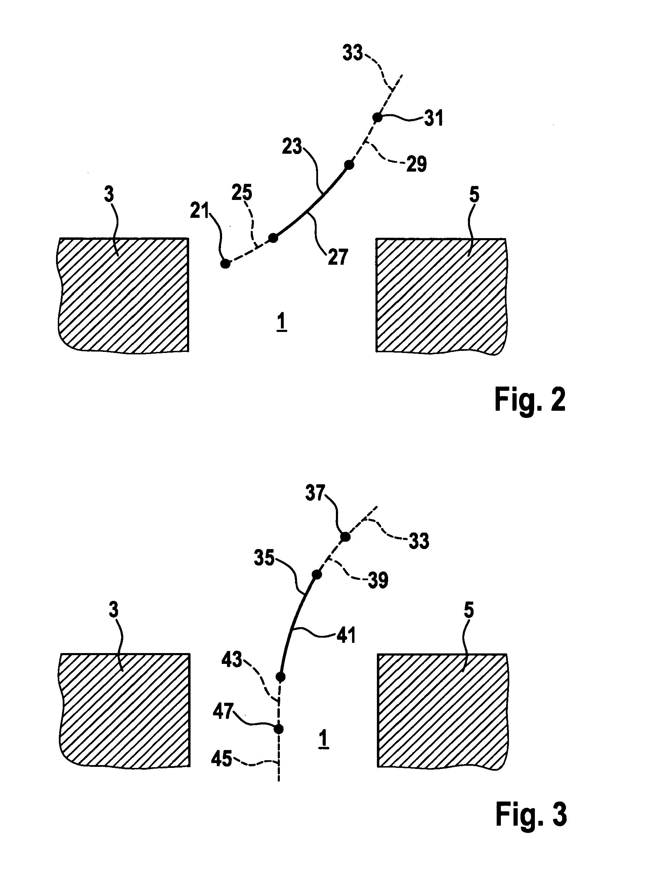

Die zweite Trajektorie 23, ausgehend vom Startpunkt 21 der zweiten Trajektorie 23 ist in Figur 2 dargestellt.

Wie die erste Trajektorie 9 auch, beginnt die zweite Trajektorie 23 mit einer ersten Klothoide 25. Entlang der ersten Klothoide 25 der zweiten Trajektorie 23 werden die Räder des Fahrzeugs wieder in die für einen nachfolgenden Kreisbogen 27 erforderliche Position gebracht. Durch die erste Klothoide 25 der zweiten Trajektorie 23 wird vermieden, dass die Räder des Fahrzeugs im Stand bewegt werden müssen. Anschließend an die erste Klothoide 25 der zweiten Trajektorie 23 folgt der Kreisbogen 27, entlang dem das Fahrzeug im zweiten Zug bewegt wird. An den Kreisbogen 27 der zweiten Trajektorie 23 schließt sich dann eine zweite Klothoide 29 an, entlang der die Räder des Fahrzeugs wieder bis zum Erreichen des Endpunktes 31 der zweiten Trajektorie 23 in die Neutralposition gebracht werden. Auch in diesem Fall kann, wenn der Fahrer das Fahrzeug nicht rechtzeitig am Endpunkt 31 der zweiten Trajektorie 23 zum Stillstand gebracht hat, das Fahrzeug entlang einer Geraden 33 weiter bewegt werden. Dies ermöglicht es auch in diesem Fall für einen nachfolgenden dritten Zug, dass das Fahrzeug entlang der Geraden 33 wieder zurück zum Endpunkt 31 bewegt werden kann, wobei der Endpunkt 31 dann den Startpunkt für eine nachfolgende dritte Trajektorie darstellt.

In Figur 3 ist eine dritte Trajektorie 35 für den Einparkvorgang in die Querparklücke 1 dargestellt.

Wenn der Fahrer am Ende der zweiten Trajektorie 23 entlang der Geraden 33 über den Endpunkt 31 hinaus gefahren ist, so bewegt sich das Fahrzeug zum Befahren der dritten Trajektorie 35 zunächst entlang der Geraden 33 zurück zum Endpunkt 31 der zweiten Trajektorie 23, der gleichzeitig Startpunkt 37 der dritten Trajektorie 35 ist. Um auch hier wieder ein Lenken der Räder im Stand zu vermeiden, beginnt die dritte Trajektorie 35 am Startpunkt 37 mit einer ersten Klothoide 39. Entlang der ersten Klothoide 39 der dritten Trajektorie 35 werden die lenkbaren Räder des Fahrzeugs in die für einen nachfolgenden Abschnitt notwendige Position gebracht. In der hier dargestellten Ausführungsform schließt sich an die erste Klothoide 39 der dritten Trajektorie 35 ein Kreisbogen 41 an. Entlang dem Kreisbogen 41 der dritten Trajektorie 35 wird das Fahrzeug nun in eine korrekte Position gebracht, um in die Querparklücke 1 eingeparkt zu werden. An den Kreisbogen 41 der dritten Trajektorie 35 schließt sich wieder eine zweite Klothoide 43 an, entlang der die Räder wieder in ihre neutrale Position gebracht werden. Das Fahrzeug kann dann entlang einer Geraden 45 bis zur Endposition geradeaus in die Parklücke bewegt werden.

Durch die entsprechenden Trajektorien, wie sie in den Figuren 1 bis 3 dargestellt sind und den derart ablaufenden Einparkvorgang in eine Querparklücke 1 wird vermieden, dass das Fahrzeug im Stillstand gelenkt werden muss. Dies hat den Vorteil, dass bei einem automatischen Lenksystem ein Stellmotor mit einer geringeren Leistung ausreicht, da geringere Kräfte an die lenkbaren Räder übertragen werden müssen als bei einem Lenken im Stand. Zudem wirkt der komplette Einparkvorgang homogen und schnell, da keine Stillstandsphasen, in denen gelenkt werden muss, existieren.

Ein weiterer Vorteil des erfindungsgemäßen Verfahrens, wie es beispielhaft in den Figuren 1 bis 3 dargestellt ist, ist, dass das System robust gegenüber dem Überfahren der Endpunkte 17, 31, 47 ist. Beim Überfahren des jeweiligen Endpunktes 17, 31, 47 bewegt sich das Fahrzeug entlang einer Geraden, entlang der das Fahrzeug beim nächsten Zug auf einfache Weise wieder zum Endpunkt 17, 31, 47 zurückbewegt werden kann.

Ein weiterer Vorteil des erfindungsgemäßen Verfahrens ist es, dass durch das Zurücklenken in die Neutralposition jeweils am Ende der jeweiligen Trajektorie 9, 23, 35 dem Fahrer ein Hinweis auf das Erreichen des Endes der Trajektorie gegeben wird. Der Fahrer braucht nicht zusätzlich über das Erreichen des jeweiligen Endes der Trajektorie 9, 23, 35 informiert werden.

Neben dem hier dargestellten Rangiermanöver zum Einparken des Fahrzeuges in eine Querparklücke 1 eignet sich das erfindungsgemäße Verfahren auch für beliebige andere Rangiermanöver. In Abhängigkeit vom jeweiligen Rangiermanöver können dabei die Trajektorien, entlang deren gefahren wird, auch von der hier dargestellten Trajektorie abweichen. So können die Trajektorien zum Beispiel zusätzliche Geradenstücke, zusätzliche Kreisbögen oder auch weitere Klothoiden enthalten. Eine Trajektorie, die sich jeweils nur aus einer ersten Klothoide, einem Kreisbogen und einer zweiten Klothoide zusammensetzt, ist nicht zwingend erforderlich zur Durchführung des Verfahrens. So kann eine Trajektorie zum Beispiel auch eine erste Klothoide, einen ersten Kreisbogen, eine zweite Klothoide, einen zweiten Kreisbogen und eine dritte Klothoide aufweisen. Auch können noch Geradenstücke enthalten sein. Kreisbögen mit unterschiedlichen Radien und Kreisbögen und Geradenstücken werden dabei jeweils durch Klothoiden verbunden, um zu vermeiden, dass das Fahrzeug im Stillstand gelenkt werden muss.

Neben der in den Figuren 1 bis 3 dargestellten Ausführungsform, bei der jeder Fahrzug in einer Klothoide endet, ist es in einer alternativen Ausführungsform auch möglich, dass der erste Fahrzug, der rückwärts gefahren wird, mit einem Kreisbogen endet. In diesem Fall beginnt die zweite Trajektorie mit einer Klothoide, bei der die Räder nicht aus der Neutralstellung in die Position für den Kreisbogen gebracht werden, sondern aus der Endstellung, die beim Erreichen des Endpunktes der ersten Trajektorie erzielt wurde. Alternativ ist es auch möglich, die Räder zunächst im Stand bis in die Neutralstellung zu bewegen und dann mit der Klothoide für den zweiten Fahrzug zu beginnen.

## Patentansprüche

1. Verfahren zur Unterstützung eines Fahrers eines Kraftfahrzeugs bei einem Rangiermanöver, wobei das Rangiermanöver mindestens einen Vorwärtszug und einen Rückwärtszug umfasst, für das Rangiermanöver notwendige Trajektorien (9, 23, 35) berechnet werden und die Lenkung des Kraftfahrzeugs durch eine automatische Lenkansteuerung realisiert wird, wobei
zumindest jeder gefahrene Vorwärtszug unmittelbar vor Erreichen eines berechneten Endpunktes (17, 47) der Trajektorie (9, 35) eine Klothoide (15, 43) aufweist, entlang der die Räder des Kraftfahrzeugs in eine neutrale Position gebracht werden, **dadurch gekennzeichnet, dass** bei einem Überfahren des berechneten Endpunktes (17, 31, 47) das Fahrzeug in einer Geradeausfahrt bewegt wird und im nachfolgenden Zug entlang der Gerade wieder bis zum berechneten Endpunkt (17, 31, 47), der nun Startpunkt (21, 37) der nächsten Trajektorie (23, 35) ist, bewegt wird.

2. Verfahren gemäß Anspruch 1, **dadurch gekennzeichnet, dass** jeder gefahrene Zug unmittelbar vor Erreichen eines berechneten Endpunktes (17, 31, 47) der Trajektorien (9, 23, 35) eine Klothoide (15, 29, 43) aufweist, entlang der die Räder des Kraftfahrzeugs in eine neutrale Position gebracht werden.

3. Verfahren gemäß Anspruch 1, **dadurch gekennzeichnet, dass** die jeweiligen Rückwärtszüge mit einem Kreisbogen enden.

4. Verfahren gemäß einem der Ansprüche 1 bis 3, **dadurch gekennzeichnet, dass** das Rangiermanöver ein Rangiermanöver in eine Parklücke ist.

5. Verfahren gemäß Anspruch 4, **dadurch gekennzeichnet, dass** die Parklücke eine Querparklücke (1) ist.

6. Verfahren gemäß einem der Ansprüche 1 bis 6, **dadurch gekennzeichnet, dass** alle für das Rangiermanöver notwendigen Trajektorien (9, 23, 35) vor dem Fahren entlang der ersten Trajektorie (9) berechnet werden.

7. Verfahren gemäß einem der Ansprüche 1 bis 7, **dadurch gekennzeichnet, dass** bei einer Trajektorie (9, 23, 35), die nicht mit einer Geradeausfahrt beginnt, ab dem Startpunkt (7, 21, 37) der Trajektorie (9, 23, 35) entlang einer ersten Klothoide (11, 25, 39) die Räder in eine für einen nachfolgenden Trajektorienabschnitt (13, 27, 41) notwendige Position gebracht werden.

8. Verfahren gemäß einem der Ansprüche 1 bis 8, **dadurch gekennzeichnet, dass** Kurvenbahnen mit unterschiedlichen Radien sowie Kurvenbahnen mit konstantem Radius und Geradenstücke der jeweiligen Trajektorien immer durch Klothoiden verbunden werden.

## Claims

1. Method to assist a driver of a motor vehicle during a manoeuvre, wherein the manoeuvre comprises at least one forward movement and one rearward movement, trajectories (9, 23, 35) which are necessary for the manoeuvre are calculated, and the steering of the motor vehicle is implemented by means of automatic steering actuation, wherein at least each forward movement which is carried out has, directly before a calculated end point (17, 47) of the trajectory (9, 35) is reached, a clothoid (15, 43) along which the wheels of the motor vehicle are moved into a neutral position, **characterized in that** when the calculated end point (17, 31, 47) is travelled over the vehicle is moved in straight-ahead travel, and in the subsequent movement along the straight line the vehicle is moved back to the calculated end point (17, 31, 47) which is then the starting point (21, 37) of the next trajectory (23, 35).

2. Method according to Claim 1, **characterized in that** each movement which is carried out has, directly before a calculated end point (17, 31, 47) of the trajectories (9, 23, 35) is reached, a clothoid (15, 29, 43) along which the wheels of the motor vehicle are moved into a neutral position.

3. Method according to Claim 1, **characterized in that** the respective rearward movements end with an arc.

4. Method according to one of Claims 1 to 3, **characterized in that** the manoeuvre is a manoeuvre into a parking space.

5. Method according to Claim 4, **characterized in that** the parking space is a transverse parking space (1).

6. Method according to one of Claims 1 to 6, **characterized in that** all the trajectories (9, 23, 35) which are necessary for the manoeuvre are calculated before travel along the first trajectory (9).

7. Method according to one of Claims 1 to 7, characterized that in the case of a trajectory (9, 23, 35) which does not start with straight-ahead travel, the wheels are moved into a position which is necessary for a subsequent trajectory section (13, 27, 41), starting from the starting point (7, 21, 37) of the trajectory (9, 23, 35) along a first clothoid (11, 25, 39).

8. Method according to one of Claims 1 to 8, **characterized in that** curved paths with different radii and curved paths with a constant radius and straight-ahead pieces of the respective trajectories are always connected by clothoids.

## Revendications

1. Procédé destiné à assister un conducteur d'un véhicule automobile lors d'une manoeuvre de stationnement, la manoeuvre de stationnement comprenant au moins une section avant et une section arrière, les trajectoires (9, 23, 35) nécessaires étant calculées pour la manoeuvre de stationnement et le pilotage du véhicule automobile étant réalisé au moyen d'une commande de direction automatique, au moins chaque section avant parcourue comportant une clothoïde (15, 43) juste avant d'atteindre un point d'extrémité (17, 47) calculé de la trajectoire (9, 35), les roues du véhicule automobile étant amenées le long de ladite clothoïde dans une position neutre, **caractérisé en ce que** lorsque le point d'extrémité (17, 31, 47) calculé est dépassé, le véhicule est déplacé en ligne droite et déplacé lors de la section suivante le long de la droite de nouveau jusqu'au point d'extrémité (17, 31, 47) calculé servant maintenant de point de départ (21, 37) de la trajectoire (23, 35) suivante.

2. Procédé selon la revendication 1, **caractérisé en ce que** chaque section parcourue comporte une clothoïde (15, 29, 43) juste avant d'atteindre un point d'extrémité (17, 31, 47) calculé des trajectoires (9, 23, 35), les roues du véhicule automobile étant amenées dans une position neutre le long de ladite clothoïde.

3. Procédé selon la revendication 1, **caractérisé en ce que** les sections arrière respectives sont pourvues d'un arc de cercle.

4. Procédé selon l'une quelconque des revendications 1 à 3, **caractérisé en ce que** la manoeuvre de stationnement est une manoeuvre de stationnement prévue dans un espace de stationnement libre.

5. Procédé selon la revendication 4, **caractérisé en ce que** l'espace de stationnement libre est un espace de stationnement en biseau (1).

6. Procédé selon l'une quelconque des revendications 1 à 6, **caractérisé en ce que** toutes les trajectoires (9, 23, 35) nécessaires à la manoeuvre de stationnement sont calculées avant de rouler le long de la première trajectoire (9).

7. Procédé selon l'une quelconque des revendications 1 à 7, **caractérisé en ce que** lorsque la trajectoire (9, 23, 35) ne commence pas par une sortie en ligne droite, à partir du point de départ (7, 21, 37) de la trajectoire (9, 23, 35) le long d'une première clothoïde (11, 25, 39), les roues sont amenées dans une position nécessaire pour une section de trajectoire (13, 27, 41) suivante.

8. Procédé selon l'une quelconque des revendications 1 à 8, **caractérisé en ce que** les pistes courbes de différents rayons ainsi que les pistes courbes de rayon constant et les sections droites des trajectoires respectives sont toujours reliées par ces clothoïdes.
